Europäisches Patentamt

European Patent Office

Office européen des brevets

(11) Publication number: **0 510 242 A2**

# EUROPEAN PATENT APPLICATION

(21) Application number: **91110079.0**

(22) Date of filing: **19.06.91**

(51) Int. Cl.⁵: **G06F 12/08**

(30) Priority: **22.04.91 US 689311**

(43) Date of publication of application:
**28.10.92 Bulletin 92/44**

(84) Designated Contracting States:
**DE GB IT**

(71) Applicant: **ACER INCORPORATED**
**7 Hsin-An Road**
**Hsin Chu Science-Based Industrial Park(TW)**

(72) Inventor: **Chuang, Te-Chih**
**No. 30, chiao-Yu St.**
**Miao-Lee City, Miao-Lee Shyuan(TW)**

(74) Representative: **Liesegang, Roland, Dr.-Ing. et al**
**FORRESTER & BOEHMERT**
**Franz-Joseph-Strasse 38**
**W-8000 München 40(DE)**

(54) **System and method for managing the routing execution in a computer system.**

(57) This patent concerns a method of managing computer programs in order to shadow the data in a storage memory device into a system memory device. Some of the data being shadowed into the system memory device is copied into a memory cache by a cacheable method. When determining if the data should be written into and shadowed to the shadow address range of the system memory device, the data copied into the memory cache is to be flushed. Or the write-in action is rendered disabled in such write-in to the memory cache. This patent also concerns a device of a supervisory computer program, including one shadow processing device, one memory cache, and a flushing device.

Figure 3

This patent concerns a method of managing computer programs in order to shadow the data in a storage memory device into a system memory device. Some of the data being shadowed into the system memory device is copied into a memory cache by a cacheable method. When determining if the data should be written into and shadowed to the shadow address range of the system memory device, the data copied into the memory cache is to be flushed. Or the write-in action is rendered disabled in such write-in to the memory cache. This patent also concerns a device of a supervisory computer program, including one shadow processing device, one memory cache, and a flushing device. When determining if the data should be written into the shadow address range for the shadow to the system memory device so that the data copied into the memory cache is to be flushed, or, by a disable device, when determining if the data should be written into the address range of the shadow to the system memory device, the write-in action (the write-in to the memory cache) is rendered disabled.

## Background of Patent

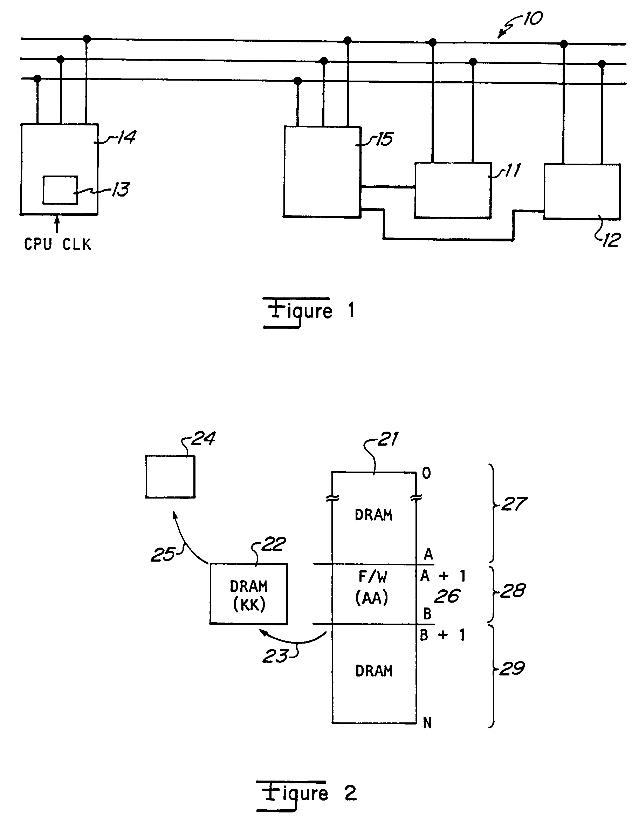

In a computer, if it is a personal computer (PC) containing a 486 series microprocessor, the primary components include the following: one (dynamic) random access memory (DRAM), one read-only memory (ROM) of storage (F/W), and a central processor unit (CPU) with cache RAM. In the system memory device, the address application and distribution is shown in Fig. 2. In the figure, from address O to address A is the dynamic random access memory (DRAM) of cacheable location (27). From address A + 1 to address B is noncacheable location (28) with (F/W) location (26) with contents AA; however, from address B + 1 to address N is also the dynamic random access memory (DRAM) of cacheable location (29). The contents in address A + 1 to address B can be shadowed by the conventional shadowing method (23) into an external DRAM with shadow memory device (22); (the contents are KK). The steps of the conventional shadowing method are as follows:

1. Copy the contents (AA) of (F/W) into external shadow memory device (22) so that the contents (AA) = contents KK (copy);

2. Transfer the control to external shadow memory device (22); and

3. The shadow memory device is set into the mode of write-protect.

However, in the conventional technique there is no way to copy the data in shadow memory device (22) into another cache RAM (24) by utilizing the cache RAM method (25); however, there is no conventional technique to maintain data coherency of (F/W) (26), shadow memory device (22) and cache RAM (24).

Brief Summary of the Invention

V. Explanation of Patent

The patent aims to provide a method and system of managing computer programs. When it is determined that data should be written in to the range of shadow address from a shadow system memory device, the data copied into the cache RAM is to be flushed. Or, the write-in action (write in to the cache RAM) is rendered disabled, thereby the (F/W) and the shadow memory device can be maintained, and data coherence among the cache RAMs can also be maintained, in addition to sufficiently increasing the speed of such (F/W) program.

Explanation of Figures

Fig. 1 is a sketch diagram of the conventional computer system;

Fig. 2 is a sketch diagram showing the address distribution, shadow method, and cache RAM method of this memory device;

Fig. 3 is a sketch diagram of the management of a computer program system in this patent;

Fig. 4 is a timing diagram to be coordinated with Fig. 5;

Fig. 5 is a circuit diagram of an example based on this patent in managing a computer program system;

Fig. 6 is a timing diagram coordinating Fig. 7; and

Fig. 7 is a circuit diagram of another example based on this patent for managing a computer program system.

In Fig. 1, the primary components of a conventional computer (10) are as follows: system memory device (11), one read-only device (12) of storage (F/W), one central processing unit (CPU) (11) of the cache RAM, and a shadow controller (15).

As shown in Fig. 2, the location of address O to address A is the address range of dynamic random access memory (DRAM) of cacheable location (27). The range from location A + 1 to location B is noncacheable location (28) with (F/W) (26) with contents AA; however, the range from location B + 1 to location N is also DRAM of cacheable location (29). By utilizing the conventional shadow method (23), the contents from location A + 1 to location B can be shadowed to external shadow memory device DRAM (22) with contents as AA. The steps of the conventional shadowing method are as follows:

1. Contents AA of (F/W) are copied into external shadow memory device (22) so that contents AA = contents KK (copy);

2. Control is transferred to external shadow memory device (22); and

3. The shadow memory device is set into a mode of write-protect. However, in the conventional technique there is no way to copy the data of a shadow memory device into cacheable RAM (24) by utilizing cacheable method (25); however, there is no conventional technique for maintaining (F/W) (26), shadow memory device (22), and for maintaining data coherence between cacheable RAMs (24).

Shown in Fig. 3, the microprocessor (30) system of this patent mainly includes a central processing unit (34), one shadow control device (35), one system memory retrieval device (31), one read-only device (32) of the storage (F/W), and a flush device (39), or a disable device (3A); connections between them include address bus (36), data bus (37), and control bus (38).

For a further explanation of the novel method of managing a computer program provided under this patent by coordinating Figs. 2 and 3, there are the following steps:

1. The data stored in (F/W) memory device (32) is shadowed into system memory device (31) by using shadow method (23);

2. Some of the data shadowed into system memory device (31) is copied into cache RAM (32) by cacheable method (25);

3. When determining whether data should be written and shadowed into the address range (A + 1 to B) of system memory device (31), a flush signal is generated to flush the data copied to cache RAM (33).

Moreover, the patent provides another method for managing computer programs; the method includes the following steps:

1. The data in memory device (32) stored into (F/W) is shadowed to system memory device (31) through shadowing method (33);

2. Some of the data shadowed to the system memory device (31) is copied into cache RAM (32) by using cacheable method (25); and

3. When determining if the data should be written in the address range (A + 1 to B) of the shadow to system memory device (31), a disable signal (EADS#) is generated so that the write-in action (write in to the cache RAM) is rendered disabled.

To generate a flush signal (FLUSH#), an executed example of this patent's control system (30) includes (refer to Figs. 2, 3, and 5) the following:

1. Shadow processing device (35) is used to shadow the data stored in memory device (32) into system memory device (31);

2. A rapid processing device (33) is used to shadow some of the data to system memory device (31) by using cacheable method (23) to be copied into cache RAM (33); and

3. Flush device (39) is used to flush the data copied into cache RAM (33) when device (39) is used to determine whether or not the data should be written in and shadowed into the address range (A + 1 to B) for the shadow to system memory device (31).

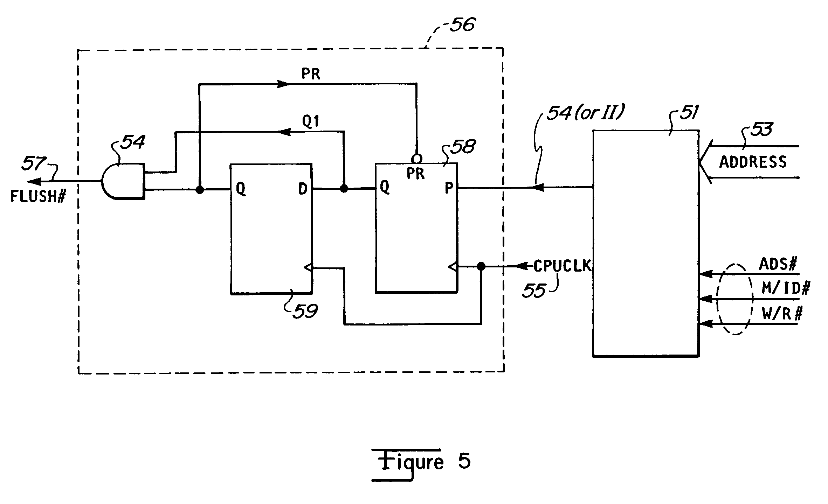

Details of the above-mentioned flushing device (39) are shown in Fig. 5, including the following:

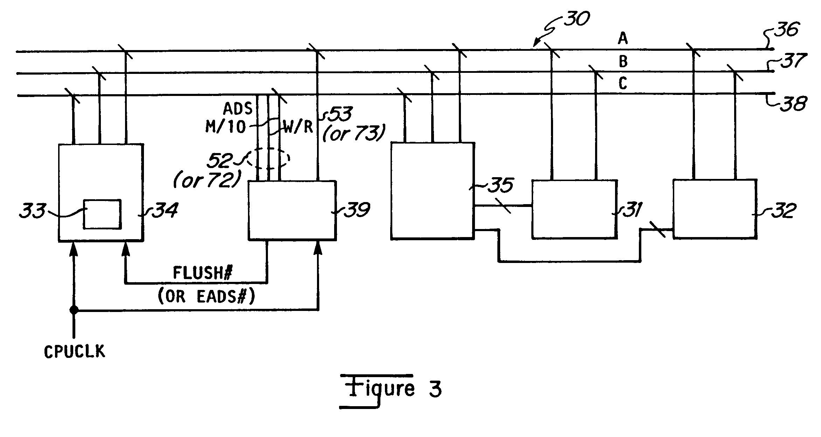

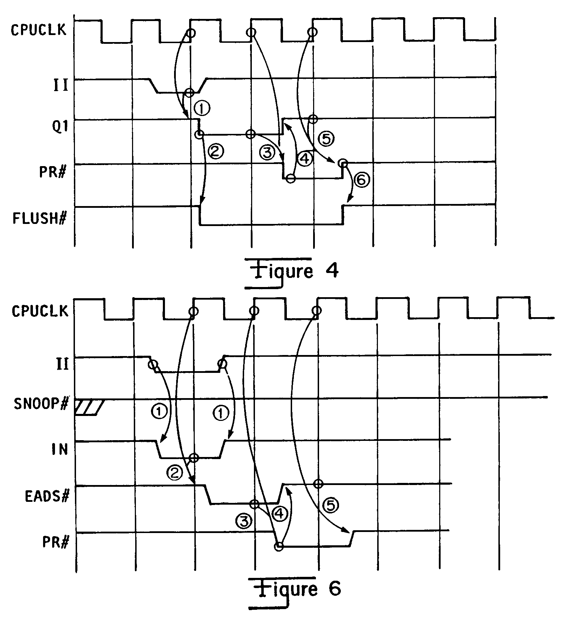

As one example, if it involves address decoder (51) of a programmable array logic (PAL), automatically controlled bus (52) receives the address state signal (ADS#) for storing or inputting/outputting signals (M/IO#), write-in or read-out signals (W/R#), and for address bus (53) receiving the address signals, when decoding the write-in data to the shadow range (A + 1 to B) of system memory device (31), decoding signal (54) is generated, and

signal adjustment device (56) includes a first flip-flop (58), a second flip-flop (59), and an AND gate (5A). The flush signal is generated so as to satisfy the timing specifications since flush signal (57) is of decoding signal (54) and CPU pulse (55); an example satisfying the timing specifications is shown in Fig. 4.

To generate a disable signal (EADS#), the executed example (refer to Figs. 2, 3, and 7) of this patent's control system (30) includes the following:

1. Shadow processing device (35) is used to shadow the data in memory device (32) into system memory device (31);

2. Cache RAM (33) is used to shadow some of the data into system memory device (31) through cacheable method (23) to copy into cache RAM (33); and

3. A disable (signal) device (3A) is used to determine if the data should be written in to the address range (A + 1 to B) for shadowing system memory device (31), the write-in action is disabled for the write-in to cache RAM (33).

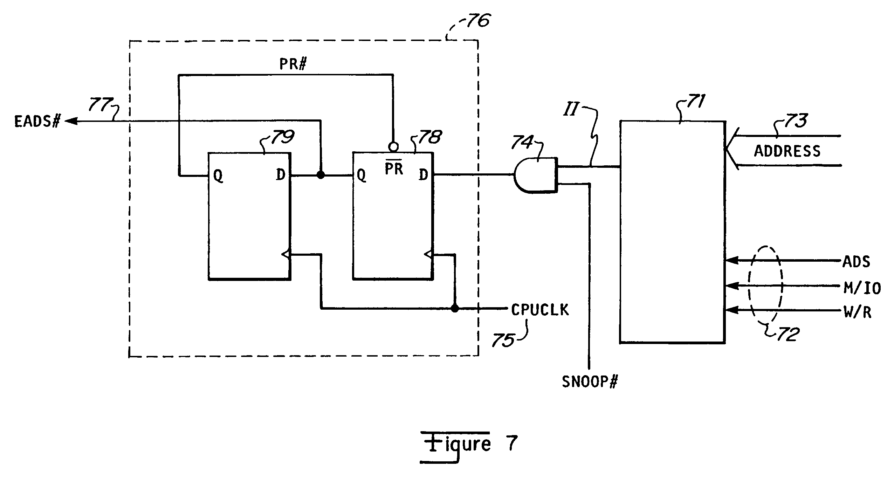

Details of the above-mentioned disable (signal) device (37) are shown in Fig. 7, including the following:

For example, if it is address decoder (71) of a programmable array logic (PAL), from controlled bus (72) the address decoder accepts the address state signal (ADS#) for storing or input and output of signal (M/10#) for the write-in or read-out signal (W/R#), and accepts the address signal from address bus (73), when decoding to the write-in data to shadow address range (A + 1 to B) of system memory device (31), then initiate a decoding signal (74); one AND gate (7A), one input terminal of which receives decoding signal (74) and another input terminal receives the monitor function monitoring signal (SNOOP#) required for the other circuit modules from the system in order to output control signal (7B); and a signal adjustment device (76) that includes one first flip-flop (78) and one second flip-flop (79) in order to receive control signal (7B) to generate disable signal (EADS#) (77) matching the timing specifications (timing spec). One example of matching the timing specifications is shown in Fig. 6.

As shown in Fig. 8, it is another execution example (timing graph) based on Fig. 7; the disable signal (EADS#) is the output of the output terminal of the second flip-flop.

**Claims**

1. A computer program management method including the following steps:
   A. data stored in a memory device are shadowed to a system memory device;
   B. some of the data, which were shadowed to the system memory device, are copied into a cache RAM by using a cacheable method; and
   C. when determining whether or not data should be written in and shadowed into the shadow address range of the system memory device, the data copied into the cache RAM are flushed.

2. A computer program management method including the following steps:
   A. data stored in a memory device are shadowed to a system memory device;
   B. some of the data, which were shadowed to the system memory device, are copied into a cache RAM by using a cacheable method; and
   C. when determining whether or not data should be written in and shadowed to the shadow address range of the system memory device, the write-in action of writing into the cache RAM is disabled.

3. A computer program management system comprising:
   A. a shadow processing device for shadowing data stored in a memory device into a system memory device;
   B. a cache RAM for copying part of the data, which were shadowed to the system memory device, into a cache RAM by applying a cacheable RAM for copying, and
   C. a flush device for flushing the data copied into the cache RAM when determining whether the data should be written in and shadowed to the shadow address range of the system memory device.

4. The system as in claim 3, wherein the flush device includes:

   an address decoder (51) for receiving an address state signal (ADS3) from a controlled bus (52) to store or input/output the signal (M/IO#) to write-in or read-out a signal (W/R#), for receiving an address signal from an address bus (53), and for releasing a decoding signal (54) to the shadow address range of the system memory device of the data that should be written in; and a signal adjustment device (56) for generating a flush signal (57) matching the timing specifications of the decoding signal (54) and a pulse signal (55).

5. The system of claim 4, wherein the address decoder (51) is a programmable array logic (PAL).

6. The system of claim 5, wherein the signal adjustment device (56) includes a first flip-flop device (56), a second flip-flop device (59), and an AND gate (5A).

7. A computer program mangagement system comprising:
   A. a shadow processing device for shadowing data stored in a shadow memory device into a system memory device;
   B. a cache RAM for copying some of the shadowed data to a cache RAM,
   C. a disabling device for disabling the write-in action of the cacheable RAM when determining whether or not data should be written into the shadow address range of the shadow memory to the system memory device.

8. The system of claim 7, wherein the disabling device includes:

   an address decoder (71) for receiving an address disposition signal (ADS#) from a controlled bus (72) to store or input/output a signal (M/IO#) and to write in or read out signals (W/R#); for receiving an address signal from an address bus (73), and for releasing a decoding signal (74), to the range of the shadow address of the system memory device; an AND gate device (7A), which receives at one of its input terminals the decoding signal (74) while its other input terminal receives a monitoring signal (SNOOP#) with a monitoring function in order to output a controlled signal (7B); and a signal adjustment device (76) for receiving a controlled signal (7B) in order to generate a disable signal (77) matching the predetermined timing specifications.

9. The system of claim 8, wherein the address decoder is a programmable array logic (PAL).

10. The system of claim 8, wherein the signal adjustment device includes one first flip-flop (33) and one second flip-flop (34).

Figure 1

Figure 2

EP 0 510 242 A2

30

36
A

37
B

38
C

ADS
M/10 — W/R 53
(or 73)

52
(or 72)

33 34 39

35 31 32

FLUSH#
(OR EADS#)

CPUCLK

Figure 3

Figure 4

Figure 6

Figure 5

Figure 7